# EUROPEAN PATENT SPECIFICATION

(11) **EP 4 332 109 B1**
(45) Date of publication and mention of the grant of the patent: **20.08.2025**
(21) Application number: 22193121.5
(22) Date of filing: 31.08.2022
(51) Int. Cl.: C08G 77/16, C09D 183/04, C09D 183/06, C09J 183/04, C09J 183/06, C07F 7/18, C08G 77/14

(54) **SILANES AND CURABLE COMPOSITIONS CONTAINING THEM**
SILANE UND DIESE ENTHALTENDE HÄRTBARE ZUSAMMENSETZUNGEN
SILANES ET COMPOSITIONS DURCISSABLES LES CONTENANT

(43) Date of publication of application: 06.03.2024
(73) Proprietor: Henkel AG & Co. KGaA, 40589 Düsseldorf (DE)
(72) Inventor: GEITNER, Felix, 40822 Mettmann (DE); GUTACKER, Andrea, 40764 Langenfeld (DE); DURACU, Adrian, 40589 Düsseldorf (DE); ZHAO, Ligang, 40593 Düsseldorf (DE); BRANDT, Adrian, 45219 Essen (DE); BECK, Horst, 41470 Neuss (DE); DELLACQUA, Andrea, 18059 Rostock (DE); TIN, Sergey, 18055 Rostock (DE); DE VRIES, Johannes Gerardus, 6228 GZ Maastricht (NL)
(74) Representative: Viering, Jentschura & Partner mbB Patent- und Rechtsanwälte

(56) References cited:
- CN-A- 111 253 906
- US-A1- 2021 277 242
- US-A1- 2022 098 371

## Description

The present invention relates to novel silanes, which contain at least one special α-hydroxycarboxylic acid ester group as well as curable compositions containing said silane and a polyorganosiloxane. The silane acts as an endcapper and crosslinker in the curable compositions and is notable particularly for being obtainable from renewable resources. In addition, it provides for improved properties compared to existing silane crosslinking compounds, such as those on lactate basis.

Silicone polymers (polyorganosiloxanes), particularly polydialkylsiloxanes such as polydimethylsiloxane (PDMS), have great importance in the production of adhesive, sealing, coating, and insulation materials. Among these, those that vulcanize at low temperatures and under ambient conditions constitute a significant share of the market. Typical formulations contain a reactive polyorganosiloxane, usually a silanol-terminated polyorganosiloxane, whereby the polyorganosiloxane has at least one, preferably two hydroxy groups bound to a silicon atom. This polymer is used in combination with a silane-based crosslinker which has hydrolyzable groups bound to the silicon atom. The term curing agent is also used occasionally instead of crosslinker. Within the context of this application, the terms crosslinker and curing agent are synonymous. The polyorganosiloxane and crosslinker can be present as separate components. The polyorganosiloxane is often reacted selectively with the crosslinker, however, to form a modified polyorganosiloxane, and said modified polyorganosiloxane is then added to the remainder of the curable composition. The term endcapping (end group capping) is also used in this regard to describe the process of reacting the polyorganosiloxane with the crosslinker. This can be carried out optionally in the presence of a catalyst, whereby the catalyst is to mediate the endcapping selectively without simultaneously curing the polyorganosiloxane.

Numerous crosslinkers for silicone systems are known. These can be differentiated into acidic, basic, and neutral crosslinkers based on the leaving groups released during hydrolysis. Typical acidic crosslinkers contain acid groups as hydrolyzable groups and release the corresponding acids, e.g., acetic acid, during the crosslinking. Typical basic crosslinkers release amines during the crosslinking. In both cases, aggressive compounds are released during the crosslinking, which can corrode or break down, e.g., metals, stone, or mortar, and which moreover have an intense, often unpleasant odor. Neutral crosslinkers are therefore often used for modern curable silicone compositions. Typical representatives of neutral crosslinkers have hydrolyzable groups, which release alcohols or oximes during the crosslinking. Alkoxy systems nevertheless have the disadvantage that multiple problems arise in the case of the storage stability of relevant curable compositions and the cured products exhibit only poor adhesion to some materials. Oximosilane crosslinkers, which hydrolyze with the release of an alkanone oxime, usually do not have these disadvantages and are therefore widely used. The most common representative of the oximosilane crosslinkers releases butan-2-one oxime during crosslinking. This is suspected of causing cancer, so that there is an urgent need for alternative neutral crosslinkers. Apart from that, the released oximes also have an intense, foul odor and working with curable compositions, which contain a relevant crosslinker, is perceived as disagreeable by the users.

Silane compounds that release α-hydroxycarboxylic acid esters or α-hydroxycarboxylic acid amides during crosslinking, in particular lactic acid and lactic acid amide based, have been proposed as alternative crosslinkers. Hardeners for silicone rubber materials, which have three 2-hydroxypropionic acid alkyl ester groups, i.e., lactic acid alkyl ester groups, in particular vinyl tris(ethyl lactato)silane, are known from EP 2 030 976 A1. EP 2 774 672 A1 describes special catalysts for the crosslinking of silicone rubber materials with a crosslinker based on a silane compound with lactate groups. Further crosslinker compounds are disclosed in EP 2 030 976 A1, EP 3271421A1, EP 3271367A1 and EP 3613803A1. CN 111 253 906 A discloses silane compounds used in curable compositions to be used for adhesives.

Although numerous crosslinking silanes have been described, there is need in the art for alternative crosslinking silanes that are at least partially obtainable from renewable sources without compromising stability and curing properties and, optimally, which exhibit improved technical performance.

It is therefore an object of the present invention to provide novel silane compounds that can be used as neutral crosslinkers in curable compositions based on polyorganosiloxanes that are at least partially obtainable from renewable sources, and have superior properties compared to existing crosslinking silanes.

The present invention achieves the object by providing silane compounds of the invention, which have at least one special α-hydroxycarboxylic acid ester group derived from modified glycolic acid esters.

In a first aspect, the present invention therefore relates to silanes of formula (1),

Si(R¹)ₘ(R²)₄₋ₘ (1)

wherein
R¹ represents:
a substituted or unsubstituted alkyl, alkenyl, or alkynyl group;
a substituted or unsubstituted cycloaliphatic group or aryl group;
a substituted or unsubstituted heteroalicyclic group or heteroaryl group;
each R² independently represents a group of the general formula (2):

   -O-CHR³-C(=O)-O-R⁴ (2)

   wherein
   R³ represents: vinyl or allyl group;
   R⁴ represents:
      a substituted or unsubstituted alkyl group having 1 to 10 carbon atoms; and
      m independently is 0 or 1, preferably 1.

The invention further relates in another aspect to curable compositions, containing at least one polyorganosiloxane (A) and at least one silane of the invention (B), wherein the polyorganosiloxane has at least one hydroxy group bound to a silicon atom. Optionally, said composition further comprises an endcapping catalyst (C) and/or a curing catalyst (D).

In a still further aspect, the invention is directed to an endcapped curable polyorganosiloxane obtainable by reacting the crosslinking silanes disclosed herein with at least one polyorganosiloxane. Such polyorganosiloxane contains at least one terminal group of the formula (3):

-A-Si(R¹)ₘ(R²)₃₋ₘ (3)

wherein:
A is a bond, -O- or a linear, branched or cyclic divalent group selected from hydrocarbon residues having 1 to 12 carbon atoms, alkylene, arylene, oxyalkylene, oxyarylene, siloxane-alkylene, siloxane-arylene, ester, amine, glycol, imide, amide, alcohol, carbonate, urethane, urea, sulfide, ether or a derivative or combination thereof;
R¹ represents:
   a substituted or unsubstituted alkyl, alkenyl, or alkynyl group;
   a substituted or unsubstituted cycloaliphatic group or aryl group;
   a substituted or unsubstituted heteroalicyclic group or heteroaryl group;
   each R² independently represents a group of the general formula (2):

      -O-CHR³-C(=O)-O-R⁴ (2)

      wherein
      R³ represents: a vinyl or allyl group;
      R⁴ represents:
         a substituted or unsubstituted alkyl group having 1 to 10 carbon atoms; and
         m independently is 0 or 1, preferably 1;
         wherein said polyorganosiloxane is obtained by reacting a polyorganosiloxane (la) having at least one reactive group/atom A', preferably at least one hydroxy group, bound to a silicon atom with the silane of formula (1), wherein any R² of the silane of formula (1) reacts with A' to form the linking group A;
         optionally in the presence of an (endcapping) catalyst for said reaction.

A "curable composition" is understood to be a substance or mixture of multiple substances, which is curable by physical or chemical measures. In this regard, these chemical or physical measures can be, for example, the supplying of energy in the form of heat, light, or other electromagnetic radiation, but also simply bringing into contact with atmospheric moisture, water, or a reactive component. The composition thereby changes from an original state to a state that has a higher hardness.

Provided reference is made to molecular weights of oligomers or polymers in the present application, the values, unless otherwise stated, refer to the weight average, i.e., the Mw value, and not to the number average. The molecular weight can be determined by gel permeation chromatography (GPC) with tetrahydrofuran (THF) as the eluent according to DIN 55672-1:2007-08, preferably at 35°C. Molecular weights of monomeric compounds are calculated based on the respective molecular formula and the known molecular weights of the individual atoms.

"At least one," as used herein, refers to 1 or more, i.e., 1, 2, 3, 4, 5, 6, 7, 8, 9, or more. In regard to an ingredient, the term relates to the type of ingredient and not to the absolute number of molecules. "At least one polymer" thus means, for example, at least one type of polymer, i.e., that a type of polymer or a mixture of a number of different polymers can be used. Together with weight data, the term refers to all compounds of the given type, contained in the composition/mixture, i.e., that the composition contains no other compounds of this type beyond the given amount of the relevant compounds.

All percentage details, provided in connection with the compositions described herein, refer to % by weight, based in each case on the relevant mixture, unless explicitly indicated otherwise.

"Alkyl," as used herein, refers to a saturated aliphatic hydrocarbon including straight-chain and branched-chain groups. The alkyl group preferably has 1 to 10 carbon atoms (if a numerical range, e.g., "1-10" is given herein, this means that this group, in this case the alkyl group, can have 1 carbon atom, 2 carbon atoms, 3 carbon atoms, etc., up to and including 10 carbon atoms). In particular, the alkyl can be an intermediate alkyl, which has 5 to 6 carbon atoms, or a lower alkyl, which has 1 to 4 carbon atoms, e.g., methyl, ethyl, n-propyl, isopropyl, butyl, isobutyl, tert-butyl, etc. The alkyl groups can be substituted or unsubstituted. "Substituted," as used in this connection, means that one or more carbon atoms and/or hydrogen atom(s) of the alkyl group are replaced by heteroatoms or functional groups. Heteroalkyl groups in which 1 or more carbon atoms are replaced by heteroatoms, particularly selected from O, S, N, and Si, are obtained by the replacement of one or more carbon atoms by heteroatoms. Examples of such heteroalkyl groups are, without limitation, methoxymethyl, ethoxyethyl, propoxypropyl, methoxyethyl, isopentoxypropyl, ethylaminoethyl, trimethoxypropylsilyl, etc.. Functional groups that can replace the hydrogen atoms are selected particularly from =O, =S, -OH, -SH, -NH₂ -NO₂, -CN, -F, -CI, - Br, -I, -OCN, -NCO, C₃₋₈ cycloalkyl, C₆₋₁₄ aryl, a 5-10-membered heteroaryl ring, in which 1 to 4 ring atoms independently are nitrogen, oxygen, or sulfur, and a 5-10-membered heteroalicyclic ring, in which 1 to 3 ring atoms are independently nitrogen, oxygen, or sulfur.

"Alkenyl," as used herein, refers to an alkyl group, as defined herein, which consists of at least two carbon atoms and comprises at least one carbon-carbon double bond, e.g., ethenyl, propenyl, butenyl, or pentenyl and structural isomers thereof such as 1- or 2-propenyl, 1-, 2-, or 3-butenyl, etc. The alkenyl groups preferably have 2 to 10 carbon atoms, such as 2 to 6 or 2, 3 or 4 carbon atoms. Alkenyl groups can be substituted or unsubstituted. If they are substituted, the substituents are as defined above for alkyl.

"Alkynyl," as used herein, refers to an alkyl group, as defined herein, which consists of at least two carbon atoms and comprises at least one carbon-carbon triple bond, e.g., ethynyl (acetylene), propynyl, butynyl, or pentynyl and structural isomers thereof as described above. Alkynyl groups can be substituted or unsubstituted. If they are substituted, the substituents are as defined above for alkyl.

A "cycloaliphatic group" or "cycloalkyl group," as used herein, refers to monocyclic or polycyclic groups (a number of rings with carbon atoms in common), particularly of 3-8 carbon atoms, in which the ring does not have a completely conjugated pi-electron system, e.g., cyclopropyl, cyclobutyl, cyclopentyl, cyclohexyl, cyclobutenyl, cyclopentenyl, cyclohexenyl, etc. Cycloalkyl groups can be substituted or unsubstituted. "Substituted," as used in this regard, means that one or more hydrogen atoms of the cycloalkyl group are replaced by functional groups. Functional groups that can replace the hydrogen atoms are selected particularly from =O, =S, -OH, -SH, -NH₂ -NO₂, -CN, -F, -Cl, -Br, -I, -OCN, -NCO, C₁₋₁₀ alkyl, C₂₋₁₀ alkenyl, C₂₋₁₀ alkynyl, C₃₋₈ cycloalkyl, C₆₋₁₄ aryl, a 5-10-membered heteroaryl ring, in which 1 to 4 ring atoms independently are nitrogen, oxygen, or sulfur, and a 5-10-membered heteroalicyclic ring, in which 1 to 3 ring atoms independently are nitrogen, oxygen, or sulfur.

"Aryl," as used herein, refers to monocyclic or polycyclic groups (i.e., rings that have neighboring carbon atoms in common), particularly of 6 to 14 carbon ring atoms which have a completely conjugated pi-electron system. Examples of aryl groups are phenyl, naphthalenyl, and anthracenyl. Aryl groups can be substituted or unsubstituted. If they are substituted, the substituents are as defined above for cycloalkyl.

A "heteroaryl" group, as used herein, refers to a monocyclic or polycyclic (i.e., rings that share an adjacent ring atom pair) aromatic ring, having particularly 5 to 10 ring atoms, where one, two, three, or four ring atoms are nitrogen, oxygen, or sulfur and the rest is carbon. Examples of heteroaryl groups are pyridyl, pyrrolyl, furyl, thienyl, imidazolyl, oxazolyl, isoxazolyl, thiazolyl, isothiazolyl, pyrazolyl, 1,2,3-triazolyl, 1,2,4-triazolyl, 1,2,3-oxadiazolyl, 1,2,4-oxadiazolyl, 1,2,5-oxadiazolyl, 1,3,4-oxadiazolyl, 1,3,4-triazinyl, 1,2,3-triazinyl, benzofuryl, isobenzofuryl, benzothienyl, benzotriazolyl, isobenzothienyl, indolyl, isoindolyl, 3H-indolyl, benzimidazolyl, benzothiazolyl, benzoxazolyl, quinolizinyl, quinazolinyl, phthalazinyl, quinoxalinyl, cinnolinyl, naphthyridinyl, quinolyl, isoquinolyl, tetrazolyl, 5,6,7,8-tetrahydroquinolyl, 5,6,7,8-tetrahydroisoquinolyl, purinyl, pteridinyl, pyridinyl, pyrimidinyl, carbazolyl, xanthenyl, or benzoquinolyl. Heteroaryl groups can be substituted or unsubstituted. If they are substituted, the substituents are as defined above for cycloalkyl.

A "heteroalicyclic group" or a "heterocycloalkyl group," as used herein, refers to a monocyclic or fused ring having 5 to 10 ring atoms, which contains one, two, or three heteroatoms, selected from N, O, and S, whereby the rest of the ring atoms are carbon. A "heterocycloalkenyl" group contains in addition one or more double bonds. The ring however has no completely conjugated pi-electron system. Examples of heteroalicyclic groups are pyrrolidinone, piperidine, piperazine, morpholine, imidazolidine, tetrahydropyridazine, tetrahydrofuran, thiomorpholine, tetrahydropyridine, and the like. Heterocycloalkyl groups can be substituted or unsubstituted. If they are substituted, the substituents are as defined above for cycloalkyl.

The silanes of the invention are silanes of the formula (1):

Si(R¹)ₘ(R^{Z})₄₋ₘ (1).

In this case, each R¹ independently stands for a substituted or unsubstituted alkyl, alkenyl, or alkynyl group; a substituted or unsubstituted cycloaliphatic group or aryl group; or a substituted or unsubstituted heteroalicyclic group or heteroaryl group.

In various embodiments, each R¹ independently of one another stands for an alkyl group having 1 to 10 carbon atoms, preferably having 1 to 4 carbon atoms, particularly methyl, ethyl, propyl, or isopropyl, for an alkenyl group having 2 to 10 carbon atoms, preferably 2 to 4 carbon atoms, particularly vinyl or allyl, or an aryl group having 6 to 10 carbon atoms, particularly phenyl.

In various preferred embodiments, R¹ independently of one another stands for methyl, vinyl, or phenyl, very particularly preferably for methyl or vinyl, most preferably for vinyl.

In formula (1), each R² independently of one another stands for a group of the general formula (2):

-O-CHR³-C(=O)-OR⁴ (2),

wherein
R³ represents a vinyl or allyl group;
R⁴ represents a substituted or unsubstituted alkyl group having 1 to 10 carbon atoms.

In various embodiments, each R² independently of one another represents a group of the formula (2), wherein R³ represents vinyl or allyl, preferably vinyl, and, R⁴ represents a substituted or unsubstituted alkyl group having 1 to 10 carbon atoms, preferably an unsubstituted alkyl group having 1 to 10 carbon atoms, particularly having 1 to 4 carbon atoms, particularly preferably methyl or ethyl.

In preferred embodiments, each R² independently of one another stands for a group of the formula (2), wherein R³ represents vinyl, and R⁴ is methyl or ethyl, preferably methyl.

In various embodiments, all R² groups are the same.

In formula (1), m can be 0 or 1, but is preferably 1.

Particularly suitable silanes of formula (1) are those derived from methyl vinyl glycolate (vinyl glycolic acid methyl ester).

A further aspect of the present invention relates to curable compositions, containing at least one polyorganosiloxane (A) and at least one silane of the formula (1) (B). The compositions may further comprise an (endcapping) catalyst (C) that catalyzes the reaction between the polyorganosiloxane and the silane of formula (1) and a curing catalyst (D). When in the following amounts are given for the respective components (A)-(D), these refer to the amount relative to the total amount of (A)-(D), unless explicitly indicated otherwise.

Such curable compositions may contain the silanes of the invention (B) in an amount of 1 to 15% by weight, particularly preferably in an amount of 3 to 10% by weight, based on the total weight of the curable composition or the total weight of polymer (A), the crosslinking silane (B) and optional catalysts (C) and (D). If a mixture of silanes of formula (1) is used, the amounts refer to the total amount of silanes of formula (1) in the composition. The amounts given for components (A), (B), (C), and (D) relate to the total weight of the curable composition or the combined weight of components (A)-(D). In some instances where the curable composition comprises significant amounts of additives, such as fillers, the amounts given herein can also refer to the total weight of components (A)-(D), i.e. without the additives. However, if not indicated otherwise, the amounts can also refer to the total weight of the composition including all additives and the like.

The at least one polyorganosiloxane (A) may be a polyorganosiloxane, which has at least one hydroxy group bound to a silicon atom. Preferably, the polyorganosiloxane has at least two hydroxy groups bound to a silicon atom. In addition, it may be preferred that the hydroxy group or hydroxy groups are bound to terminal silicon atoms. If the polyorganosiloxane is branched, it preferably has a hydroxy group at each end.

In such embodiments, the at least one hydrogen atom or hydroxy group allows reaction/endcapping with the silane of formula (1). In case of a hydroxy group, the silanes of formula (1) can react with the polyorganosiloxane in a condensation reaction.

The at least one polyorganosiloxane (A) is preferably a polydiorganosiloxane, more preferably a polydimethylsiloxane.

In various embodiments, an α,ω-dihydroxy-terminated polydiorganosiloxane, preferably an α,ω-dihydroxy-terminated polydimethylsiloxane is used as the polyorganosiloxane. Particularly preferred are α,ω-dihydroxy-terminated polydimethylsiloxanes, which have a kinematic viscosity at 25°C of 5000 to 120,000 cSt, particularly 10,000 to 100,000 cSt, and particularly preferably 15,000 to 90,000 cSt (1 cSt = 1 Pa.s).

In various embodiments, the curable compositions contain the at least one polyorganosiloxane in an amount of 30 to 95% by weight, for example 40 to 95, 40 to 90, 40 to 80, 40 to 70, 50 to 95, 60 to 95, 70 to 95 or 70 to 90 % by weight, based on the total weight of the composition or the sum of components (A)-(D), as detailed above. If a mixture of polyorganosiloxanes is used, the amounts given relate to the total amount of the polyorganosiloxanes in the composition.

The curable compositions can contain the polyorganosiloxane and the silane of the formula (1) as separate components. It is likewise possible, however, that these components are present in the form of a prepolymer. The prepolymer is a reaction product of the two components. Suitable reactions are known and are also called endcapping. This can be carried out optionally in the presence of a catalyst (C), whereby the catalyst is to mediate the endcapping selectively without simultaneously curing the polyorganosiloxane. Suitable catalysts are, for example, acids, organic lithium compounds, as they are described, for example, in EP 0 564 253 A1, amines, inorganic oxides, potassium acetate, organotitanium derivatives, titanium/amine combinations, and carboxylic acid/amine combinations. In various embodiments, said endcapping catalyst (C) may be lithium hydroxide in an alcohol (e.g. methanol) or an aminosilane (e.g. γ-aminopropyltrimethoxysilane).

The curable compositions may thus contain an endcapping catalyst (C), typically in an amount of 0.01 to 2% by weight, preferably in an amount of 0.05 to 2% by weight, particularly preferably in an amount of 0.1 to 0.5% by weight, based in each case on the total weight of the composition or the total weight of components (A)-(D). If a mixture of catalysts is used, the given amounts refer to the total amount of endcapping catalyst in the composition.

If the polyorganosiloxane and the silane of the formula (1) are present as a prepolymer, the above amounts given separately for the polyorganosiloxane and the silane are to be added to yield the amounts of the endcapped polyorganosiloxane. The curable compositions, therefore, contain the prepolymer preferably in an amount of 31 to 99% by weight, particularly preferably in an amount of 43 to 80% by weight, based in each case on the total weight of (A)-(D) or the total weight of the composition. If a mixture of prepolymers is used, the amounts refer to the total amount of prepolymers in the composition.

The prepolymers or endcapped polymers also form an aspect of the present invention. These endcapped curable polyorganosiloxanes are obtainable by reacting the crosslinking silanes of formula (1) disclosed herein with at least one polyorganosiloxane comprising at least one terminal group of the formula (3):

-A-Si(R¹)ₘ(R²)₃₋ₘ (3)

wherein:
A is a bond, -O- or a linear, branched or cyclic divalent group selected from hydrocarbon residues having 1 to 12 carbon atoms, alkylene, arylene, oxyalkylene, oxyarylene, siloxane-alkylene, siloxane-arylene, ester, amine, glycol, imide, amide, alcohol, carbonate, urethane, urea, sulfide, ether or a derivative or combination thereof;
R¹ represents:
   a substituted or unsubstituted alkyl, alkenyl, or alkynyl group;
   a substituted or unsubstituted cycloaliphatic group or aryl group;
   a substituted or unsubstituted heteroalicyclic group or heteroaryl group;
   each R² independently represents a group of the general formula (2):

      -O-CHR³-C(=O)-O-R⁴ (2)

      wherein
      R³ represents: a vinyl or allyl group;
      R⁴ represents: a substituted or unsubstituted alkyl group having 1 to 10 carbon atoms; and
      m independently is 0 or 1, preferably 1.

Said polyorganosiloxanes are obtained by reacting a polyorganosiloxane (la) having at least one reactive group/atom A', preferably at least one hydroxy group, bound to a silicon atom, such as the polyorganosiloxanes (A) described above, with the silane of formula (1), wherein m is 1. In said reaction, any one group R² of the silane of formula (1) reacts with A' to form the linking group -A-. This reaction is optionally carried out in the presence of an (endcapping) catalyst for said reaction, in particular those described as component (C) herein. In a specific example, A is -O-, m is 1, and R¹ and R² are as defined above for the silanes of formula (1). All embodiments disclosed herein for the silanes of formula (1) are similarly applicable to these endcapped polyorganosiloxanes, insofar applicable.

The invention also relates to curable compositions comprising such endcapped polyorganosiloxanes, optionally in combination with the endcapping and/or curing catalysts and any one or more of the other components disclosed herein below.

The compositions of the invention crosslink in the presence of moisture and in so doing cure with the formation of Si-O-Si bonds. Said curing can be accelerated by the addition of a suitable curing catalyst.

Preferably, the curable composition therefore further comprises at least one curing catalyst (D), for example a tin compound.

Preferably, this tin compound is an organotin compound or an inorganic tin salt. Tin in these tin compounds is preferably bivalent or tetravalent. Suitable inorganic tin salts are, for example, tin(II) chloride and tin(IV) chloride. Organotin compounds (tin organyles) are used preferably as tin compounds, however. Suitable organotin compounds are, for example, the 1,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and Di-n-octyltin oxide; and the tin(II) carboxylates such as tin(II) octoate or tin(II) phenolate.

Also suitable are tin compounds of ethyl silicate, dimethyl maleate, diethyl maleate, dioctyl maleate, dimethyl phthalate, diethyl phthalate, dioctyl phthalate, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, (n-butyl)₂Sn(SCH₂COO), (n-octyl)₂Sn(SCH₂COO), (n-octyl)₂Sn(SCH₂CH₂COO), (n-octyl)₂Sn(SCH₂CH₂COOCH₂CH₂OCOCH₂S), (n-butyl)₂-Sn(SCH₂COO-i-C₈H₁₇)₂, (n-octyl)₂Sn(SCH₂COO-i-C₈H₁₇)₂, and (n-octyl)₂Sn(SCH₂COO-n-C₈H₁₇)₂.

Preferably, the tin compound is selected from 1,3-dicarbonyl compounds of bivalent or tetravalent tin, the dialkyltin(lV) dicarboxylates, the dialkyltin(IV) dialkoxylates, the dialkyltin(IV) oxides, the tin(II) carboxylates, and mixtures thereof.

Particularly preferably, the tin compound is a dialkyltin(IV) dicarboxylate, particularly di-n-butyltin dilaurate or di-n-octyltin dilaurate.

Tin-free curing catalysts can be used as alternatives to the tin compounds.

Suitable tin-free curing catalysts are, for example, organometallic compounds of iron, such as 1,3-dicarbonyl compounds of iron such as, e.g., iron(III) acetylacetonate.

Boron halides such as boron trifluoride, boron trichloride, boron tribromide, boron triiodide, or mixtures of boron halides can also be used as curing catalysts. Preferred are boron trifluoride complexes such as, e.g., boron trifluoride diethyl etherate, which as liquids are easier to handle than gaseous boron halides.

Furthermore, amines, nitrogen heterocycles, and guanidine derivatives are also generally suitable as curing catalysts. An well-known, suitable catalyst from this group of compounds is 1,8-diazabicyclo[5.4.0]undec-7-ene (DBU).

In addition, titanium, aluminum, and zirconium compounds, or mixtures thereof can be used as catalysts. On the one hand, the use of tin compounds can thus be avoided, and, on the other hand, a better adhesion to normally poorly adherent organic surfaces such as, e.g., acrylates can be achieved. Of titanium, aluminum, and zirconium catalysts, titanium catalysts are preferred.

Suitable titanium catalysts are compounds that have hydroxy groups and/or substituted or unsubstituted alkoxy groups. Said group therefore comprises titanium alkoxides of the general formula

Ti(OR^{z})₄,

where R^{z} is an organic group, preferably a substituted or unsubstituted hydrocarbon group having 1 to 20 C atoms, and the 4 alkoxy groups -OR^{z} are identical or different. Further, one or more of the -OR^{z} groups can be replaced by acyloxy groups -OCOR^{z}. Similarly suitable as titanium catalysts are titanium alkoxides in which one or more alkoxy groups are replaced by a hydroxy group or halogen atoms.

In various other embodiments, titanium chelate complexes can be used.

Another alternative are aluminum catalysts, e.g., aluminum alkoxides of the formula

Al(OR^{z})₃,

where R^{z} is as defined above, i.e., it is an organic group, preferably a substituted or unsubstituted hydrocarbon group having 1 to 20 C atoms and the three R^{z} groups are identical or different. In such aluminum alkoxides, one or more of the alkoxy groups can be replaced by acyloxy groups -OC(O)R^{z}.

Also suitable are aluminum alkoxides in which one or more alkoxy groups are replaced by a hydroxy group or halogen atoms.

Of the described aluminum catalysts, the pure aluminum alcoholates are preferred in view if their stability to moisture and the curability of the mixtures to which they are added. In addition, aluminum chelate complexes are preferred.

Suitable zirconium catalysts include, without limitation, tetramethoxyzirconium or tetraethoxyzirconium.

Further examples include diisopropoxyzirconium bis(ethyl acetoacetate), triisopropoxyzirconium (ethyl acetoacetate), and isopropoxyzirconium tris(ethyl acetoacetate).

Also suitable are zirconium acylates, halogenated zirconium catalysts and zirconium chelate complexes.

In various other embodiments, carboxylic acid salts of metals or also a mixture of a number of such salts can be used as curing catalysts, wherein these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they show particularly high activities. Calcium, vanadium, iron, zinc, titanium, and zirconium carboxylates are particularly preferred. Iron and titanium carboxylates are very particularly preferred.

The curable compositions may contain the curing catalyst (D) in an amount of 0.01 to 2% by weight, preferably in an amount of 0.05 to 2% by weight, particularly preferably in an amount of 0.1 to 0.5% by weight, based in each case on the total weight of the curable composition or the total weight of components (A)-(D) of the composition. If a mixture of curing catalysts is used, the given amounts refer to the total amount of curing catalyst in the composition.

The curable compositions can contain, apart from the aforesaid components, one or more components that can be used to influence specific properties of the curable composition and/or the cured product.

These other components can be selected, for example, from the group comprising plasticizers, stabilizers, antioxidants, fillers, reactive diluents, drying agents, adhesion promoters, UV stabilizers, rheological aids, and/or solvents. In this case, particular importance is attached to adhesion promoters, plasticizers, fillers, and stabilizers, comprising antioxidants and UV stabilizers.

Preferably, the curable compositions therefore contain at least one further component.

The curable composition of the invention can further comprise one or more adhesion promoters. An adhesion promoter is understood to be a substance that improves the adhesion properties of adhesive layers on surfaces.

Suitable are silane adhesion promoters, particularly alkoxysilanes, with a (further) functional group such as, e.g., an amino group, a mercapto group, an epoxy group, a carboxyl group, a vinyl group, an isocyanate group, an isocyanurate group, or a halogen. Examples are γ-mercaptopropyltrimethoxysilane, γ-mercaptopropyltriethoxysilane, γ-mercaptopropylmethyldimethoxysilane, γ-glycidoxypropyltrimethoxysilane, γ-glycidoxypropyltriethoxysilane, γ-glycidoxypropylmethyldimethoxysilane, β-carboxyethyltriethoxysilane, β-carboxyethylphenylbis-(2-methoxyethoxy)silane, N-β-(carboxymethyl)aminoethyl-γ-aminopropyltrimethoxysilane, vinyltrimethoxysilane, vinyltriethoxysilane, γ-acroyloxypropylmethyltriethoxysilane, γ-isocyanatopropyltrimethoxysilane, γ-isocyanatopropyltriethoxysilane, γ-isocyanatopropylmethyldiethoxysilane, γ-isocyanatopropylmethyldimethoxysilane, tris(trimethoxysilyl)isocyanurate, and γ-chloropropyltrimethoxysilane.

In various embodiments, the adhesion promoters are selected from aminosilanes (aminofunctional alkoxysilanes or aminoalkylalkoxysilanes), such as, e.g., γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)-3-aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, N-phenyl-γ-aminopropyltrimethoxysilane, N-benzene-γ-aminopropyltrimethoxysilane, and N-vinylbenzyl-γ-aminopropyltriethoxysilane, and oligomeric aminosilanes, such as, e.g., aminoalkyl group-modified alkylpolysiloxane (Dynasylan 1146).

In various embodiments, the curable compositions comprise the adhesion promoter(s) in an amount of up to 20% by weight, primarily in an amount of 0.05 to 4% by weight, preferably in an amount of 0.1 to 2% by weight, particularly preferably in an amount of 0.2 to 2% by weight, based in each case on the total weight of the composition, including all auxiliaries.

The viscosity of the curable composition can be reduced by using a reactive diluent.

Preferably, the reactive diluent has at least one functional group which reacts, e.g., with moisture or atmospheric oxygen, after application. Examples of groups of this type are silyl groups, isocyanate groups, ethylenically unsaturated groups, and polyunsaturated systems.

All compounds that can be mixed with the other components resulting in a reduction in viscosity and having at least one group reactive with the polymer can be used as reactive diluents.

The viscosity of the reactive diluent is preferably less than 20,000 mPas, particularly preferably about 0.1 to 6000 mPas, very particularly preferably 1 to 1000 mPas (Brookfield RVT, 23°C, spindle 7, 10 rpm).

Suitable reactive diluents are, without limitation, polyalkylene glycols reacted with isocyanatosilanes (e.g., Synalox 100-50B, DOW), carbamatopropyltrimethoxysilane, alkyltrimethoxysilane, alkyltriethoxysilane, such as methyltrimethoxysilane, methyltriethoxysilane, and vinyltrimethoxysilane (XL 10, Wacker), vinyltriethoxysilane, phenyltrimethoxysilane, phenyltriethoxysilane, octyltrimethoxysilane, tetraethoxysilane, vinyldimethoxymethylsilane (XL12, Wacker), vinyltriethoxysilane (GF56, Wacker), vinyltriacetoxysilane (GF62, Wacker), isooctyltrimethoxysilane (IO Trimethoxy), isooctyltriethoxysilane (IO Triethoxy, Wacker), N-trimethoxysilylmethyl-O-methyl carbamate (XL63, Wacker), N-dimethoxy(methyl)silylmethyl-O-methyl carbamate (XL65, Wacker), hexadecyltrimethoxysilane, 3-octanoylthio-1-propyltriethoxysilane, and partial hydrolysates of said compounds.

Further, the following polymers from Kaneka Corp. can also be used as reactive diluents: MS S203H, MS S303H, MS SAT 010, and MS SAX 350.

Also suitable are silane-modified polyethers which are obtainable, e.g., from the reaction of isocyanatosilane with Synalox types.

Also suitable are polymers that can be prepared from an organic framework by grafting with a vinylsilane or by reacting polyol, polyisocyanate, and alkoxysilane.

Preferably, the compounds used as reactive diluent in the context of the present invention have at least one alkoxysilyl group, with di- and trialkoxysilyl groups being preferred.

Suitable as polyisocyanates for the preparation of a reactive diluent are, for example, ethylene diisocyanate, 1,4-tetramethylene diisocyanate, 1,4-tetramethoxybutane diisocyanate, 1,6-hexamethylene diisocyanate (HDI), cyclobutane-1,3-diisocyanate, cyclohexane-1,3 and -1,4 diisocyanate, bis(2-isocyanatoethyl) fumarate, as well as mixtures of two or more thereof, 1-isocyanato-3,3,5-trimethyl-5-isocyanatomethyl cyclohexane (isophorone diisocyanate, IPDI), 2,4- and 2,6-hexahydrotoluylene diisocyanate, hexahydro-1,3- or -1,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, or 4,4'-diphenylmethane diisocyanate (MDI), or the partially or completely hydrogenated cycloalkyl derivatives thereof, for example, completely hydrogenated MDI (H12-MDI), alkyl-substituted diphenylmethane diisocyanates, for example, mono-, di-, tri-, or tetraalkyl diphenylmethane diisocyanate and the partially or completely hydrogenated cycloalkyl derivatives thereof, 4,4'-diisocyanatophenyl perfluoroethane, phthalic acid bis-isocyanatoethyl ester, 1-chloromethylphenyl-2,4- or -2,6-diisocyanate, 1-bromomethylphenyl-2,4- or - 2,6-diisocyanate, 3,3-bis-chloromethyl ether-4,4'-diphenyl diisocyanate, sulfur-containing diisocyanates, as can be obtained by reacting 2 mol of diisocyanate with 1 mol of thiodiglycol or dihydroxydihexyl sulfide, the di- and triisocyanates of dimer and trimer fatty acids, or mixtures of two or more of the aforesaid diisocyanates.

Trivalent or higher-valent isocyanates, as can be obtained, for example, by oligomerization of diisocyanates, particularly by oligomerization of the aforesaid isocyanates, can also be used as polyisocyanates. Examples of such trivalent and higher-valent polyisocyanates are the triisocyanurates of HDI or IPDI or mixtures thereof or mixed triisocyanurates thereof, as well as polyphenylmethylene polyisocyanate, as can be obtained by phosgenation of aniline-formaldehyde condensation products.

For reducing the viscosity of the curable compositions, solvents and/or plasticizers can be used in addition to or instead of a reactive diluent.

Suitable as solvents are aliphatic or aromatic hydrocarbons, halogenated hydrocarbons, ketones, ethers, esters, ester alcohols, keto alcohols, keto ethers, keto esters, and ether esters.

In various embodiments, the compositions disclosed herein may comprise hydrophilic plasticizers. These are used to improve the moisture absorption and thereby to improve the reactivity at low temperatures. Suitable as plasticizers are, for example, esters of abietic acid, adipic acid esters, azelaic acid esters, benzoic acid esters, butyric acid esters, acetic acid esters, esters of higher fatty acids having approximately 8 to approximately 44 carbon atoms, epoxidized fatty acids, fatty acid esters and fats, glycolic acid esters, phosphoric acid esters, phthalic acid esters, linear or branched alcohols containing 1 to 12 carbon atoms, propionic acid esters, sebacic acid esters, sulfonic acid esters, thiobutyric acid esters, trimellitic acid esters, citric acid esters, and esters based on nitrocellulose and polyvinyl acetate, as well as mixtures of two or more thereof.

For example, of the group of phthalic acid esters, dioctyl phthalate, dibutyl phthalate, diisoundecyl phthalate, or butylbenzyl phthalate are particularly suitable, and of the adipates, dioctyl adipate, diisodecyl adipate, diisodecyl succinate, dibutyl sebacate, or butyl oleate are preferred.

Similarly suitable as plasticizers are pure or mixed ethers of monofunctional, linear or branched C₄₋₁₆ alcohols or mixtures of two or more different ethers of such alcohols, for example, dioctyl ether.

Further suitable plasticizers include endcapped polyethylene glycols, for example, polyethylene or polypropylene glycol di-C₁₋₄-alkyl ethers, particularly the dimethyl or diethyl ethers of diethylene glycol or dipropylene glycol, and mixtures of two or more thereof.

Preferred plasticizers, comprise, without limitation, endcapped polyethylene glycols, such as polyethylene or polypropylene glycol dialkyl ethers, where the alkyl group has up to four C atoms, and particularly the dimethyl and diethyl ethers of diethylene glycol and dipropylene glycol. Good curing is achieved in particular with dimethyldiethylene glycol also under less favorable application conditions (low humidity, low temperature). Reference is made to the relevant technical chemistry literature for further details on plasticizers.

Similarly suitable as plasticizers within the scope of the present invention are diurethanes, which can be prepared, for example, by reacting diols, having OH end groups, with monofunctional isocyanates, by selecting the stoichiometry such that substantially all free OH groups react. Optionally excess isocyanate can then be removed from the reaction mixture, for example, by distillation. A further method for preparing diurethanes consists of reacting monofunctional alcohols with diisocyanates, whereby all NCO groups are reacted if possible.

Preferably, the curable composition comprises at least one plasticizer, particularly a polydimethylsiloxane.

The curable compositions may contain the reactive diluents, the solvent and/or the plasticizer preferably in an amount of 1 to 50% by weight, preferably in an amount of 10 to 40% by weight, particularly preferably in an amount of 20 to 40% by weight, based in each case on the total weight of the composition. If a mixture of a number of reactive diluents, solvents, and/or plasticizers is used, the amounts given refer to the total amount of reactive diluents, solvents, and/or plasticizers in the composition.

The curable composition can contain one stabilizer, selected from antioxidants, UV stabilizers, and drying agents.

All conventional antioxidants may be used as antioxidants. They are preferably present in the compositions in amounts of up to about 7% by weight, particularly up to about 5% by weight.

The compositions may further comprise UV stabilizers, which are preferably used in amounts of up to about 2% by weight, preferably about 1% by weight. The so-called hindered amine light stabilizers (HALS) are particularly suitable as UV stabilizers. It is preferred within the context of the present invention if a UV stabilizer is employed, which carries a silyl group and is incorporated into the end product during crosslinking or curing. Further, benzotriazoles, benzophenones, benzoates, cyanoacrylates, acrylates, sterically hindered phenols, phosphorus, and/or sulfur can also be added.

It is often useful to stabilize the compositions in regard to penetrating moisture by means of drying agents in order to further increase the storability (shelf life). All compounds that react with water with the formation of a group inert to the reactive groups present in the preparation are in principle suitable as drying agents and thereby undergo the smallest possible changes in their molecular weight. Furthermore, the reactivity of the drying agents to moisture penetrating into the preparation must be higher than the reactivity of the groups of the silyl group-bearing polymer of the invention present in the preparation

Suitable as drying agents are thus, for example, isocyanates. In various preferred embodiments, however, silanes are used as drying agents, such as, for example, vinylsilanes such as 3-vinylpropyltriethoxysilane, oxime silanes such as methyl-O,O',O"-butan-2-one-trioximosilane or O,O',O",O‴-butan-2-one-tetraoximosilane (CAS Nos. 022984-54-9 and 034206-40-1) or benzamidosilanes such as bis(N-methylbenzamido)methylethoxysilane (CAS No. 16230-35-6) or carbamatosilanes such as carbamatomethyltrimethoxysilane. The use of methyl-, ethyl-, or vinyltrimethoxysilane, tetramethyl- or tetraethylethoxysilane is also possible. Vinyltrimethoxysilane and tetraethoxysilane are particularly preferred in terms of cost and efficiency.

Similarly suitable as drying agents are the above-mentioned reactive diluents, provided they have a molecular weight (Mₙ) of less than about 5000 g/mol and have end groups whose reactivity to penetrated moisture is at least as high as, preferably higher than, the reactivity of the reactive groups of the polymer used according to the invention.

Finally, alkyl orthoformates or alkyl orthoacetates can also be used as drying agents, for example, methyl or ethyl orthoformate or methyl or ethyl orthoacetate,

The compositions generally contain about 0 to about 6% by weight of drying agent.

The composition described herein can contain fillers. Suitable fillers include, without limitation, chalk, lime powder, precipitated and/or pyrogenic silica, zeolites, bentonites, magnesium carbonate, kieselguhr, alumina, clay, talc, titanium oxide, iron oxide, zinc oxide, sand, quartz, flint, mica, glass powder, and other ground mineral substances as well as carbon black and graphite. Organic fillers can also be used, including, without limitation, wood fibers, wood flour, sawdust, cellulose, cotton, pulp, cotton, wood chips, chopped straw, and chaff. Further, short fibers such as glass fibers, glass filament, polyacrylonitrile, carbon fibers, Kevlar fibers, or polyethylene fibers can also be added. Aluminum powder is likewise suitable as a filler.

The pyrogenic and/or precipitated silicas advantageously have a BET surface area of 10 to 90 m²/g. When they are used, they do not cause any additional increase in the viscosity of the composition of the invention, but contribute to strengthening the cured composition.

It is likewise conceivable to use pyrogenic and/or precipitated silicas with a higher BET surface area, advantageously with 100 to 250 m²/g, particularly 110 to 170 m²/g, as a filler. Because of the higher BET surface area, the same effect, e.g., strengthening of the cured preparation, can be achieved at a smaller weight proportion of silica. Further substances can thus be used to improve the composition described herein in terms of other requirements.

Suitable further as fillers are hollow spheres having a mineral shell or a plastic shell. These can be, for example, hollow glass spheres which are obtainable commercially under the trade names Glass Bubbles^{®}. Plastic-based hollow spheres, e.g., Expancel^{®} or Dualite^{®}, are described, for example, in EP 0 520 426 B1. They are made up of inorganic or organic substances and each have a diameter of 1 mm or less, preferably 500 µm or less.

Fillers that impart thixotropy to the preparations are preferred for many applications. Such fillers are also described as rheological adjuvants, e.g., hydrogenated castor oil, fatty acid amides, or swellable plastics such as PVC. In order to be readily squeezable out of a suitable dispensing device (e.g., a tube), such preparations possess a viscosity at 20°C from 3000 to 15,000, preferably 40,000 to 80,000 mPas, or even 50,000 to 60,000 mPas.

The fillers are preferably used in an amount of 1 to 80% by weight, particularly preferably 2 to 50% or 2 to 30% or 2 to 25% or 5 to 20% by weight, based in each case on the total weight of the composition. Of course, mixtures of several fillers can also be used. In this case, the amounts given refer to the total amount of filler in the composition.

The preparation of the curable composition can take place by simple mixing of the polyorganosiloxane, which has at least one hydroxy group bound to a silicon atom, of the silane of the formula (1), and optionally the other ingredients. This can take place in suitable dispersing units, e.g., a high-speed mixer. In this case, preferably, care is taken that the mixture does not come into contact with moisture as far as possible, which could lead to an undesirable premature curing. Suitable measures are sufficiently known and comprise, for example, working in an inert atmosphere, possibly under a protective gas, and drying/heating of individual components before they are added.

A preferred production method comprises mixing the polyorganosiloxane, which has at least one hydroxy group bound to a silicon atom, and the silane of the formula (1) in a first step, whereby this can take place in the presence of at least an aminosilane or lithium hydroxide in an alcohol (e. g. methanol) and at least one plasticizer, in a second step optionally adding other ingredients with the exception of the curing catalyst and mixing all ingredients, and in a third step lastly adding a curing catalyst and mixing it with the other components.

The invention further relates to the use of the compositions of the invention as an adhesive or sealing or coating material.

The composition or preparation of the invention therefore can be used as an adhesive, sealant, coating, and for the production of molded parts.

The compositions and preparations disclosed herein are generally suitable for bonding various materials, such as plastics, metals, glass, ceramic, wood, wood-based materials, paper, paper-based materials, rubber, and textiles, for gluing floors, and for sealing building elements, windows, wall and floor coverings, and joints in general.

The following examples serve to illustrate the invention, but the invention is not limited thereto.

### Examples

### Example 1:

The following compositions were prepared, with Ref1 and 2 being reference compositions and Ex1 being a composition according to the invention.

**Table 1 (all amounts in % by weight relative to total weight)**

| | **Ref1** | **Ref2** | **Ex1** |
|---|---|---|---|
| **Raw materials** | | | |
| α,ω-Dihydroxy-terminated polydimethylsiloxane with a viscosity of 20,000 cST (Bluesil FLD 48 V 20000) | 95.6 | 90.2 | 90.2 |
| Vinyl trimethoxysilane | 3.6 | - | - |
| Vinyl tris(ethyl lactato)silane | - | 9.0 | - |
| Vinyl tris(methyl vinyl glycolate)silane* | - | - | 9.0 |
| Endcapping catalyst (Bluesil SLT CATA 51015; (lithium hydroxide in methanol)) | 0.4 | 0.4 | 0.4 |
| Curing catalyst (di-n-octyltin dilaurate (DOTL)) | 0.4 | 0.4 | 0.4 |

| | | | |
|---|---|---|---|
| *Silane of formula (1) with m=1, R1=vinyl, R3=vinyl and R4=methyl | | | |

All three compositions were tested for SOT and TFT as follows:
SOT: The aforementioned compositions were homogenized and applied in a frame (50x130x2 mm). Each mixture was evenly distributed so that the frame can be completely filled. A thin polymer film was thereby obtained. The time to form a skin (skin-over time/SOT) was determined for these compositions using a tool which has a rounded spatula at the tip (150x5 mm). The tip of the spatula was gently contacted with the surface of the polymer film every 1 to 5 minutes and removed carefully. The SOT was measured once no more residue of the formulation remains on the spatula when removing it from the surface of the polymer film. Then, the resulting string must be removed from the spatula without residue. The polymer film returned to its original shape. In examining the SOT a different part of the surface of the polymer film must be used every time. The test was performed at room temperature (20°C).

TFT: To determine surface tackiness from an adhesive sealing material, the aforementioned compositions were homogenized and applied in a frame (50x130x2 mm) in the same way as the SOT determination. After 60 minutes, the tackiness of the surface was evaluated using a tool which has a rounded spatula at the tip (150x5 mm) by careful contact with the surface of the polymer film, TFT of "< 60 min" indicates "not tacky" and of "> 60 min" indicates "tacky (including slightly tacky)".

Shore A hardness was determined as described in DIN EN ISO 868:2003.

The results are shown in Table 2

**Table 2: Properties of the compositions**

| | **Ref1** | **Ref2** | **Ex1** |
|---|---|---|---|
| Skin-over time (min) | 38 | 50 | 15 |
| Tack free time (min) | 270 | 180 | 60 |
| Shore A 1d | 20 | 19 | 20 |
| Shore A 7d | 22 | 19 | 20 |

The results show that SOT and TFT are significantly shorter for the compositions of the invention relative to the prior art compositions Ref1 and Ref2 which use known silane crosslinkers. The Shore A hardness is comparable between all tested compositions.

## Claims

1. A silane of formula (1),
Si(R¹)ₘ(R²)₄₋ₘ (1)
wherein
each R¹ independently stands for:
a substituted or unsubstituted alkyl, alkenyl, or alkynyl group;
a substituted or unsubstituted cycloaliphatic group or aryl group;
a substituted or unsubstituted heteroalicyclic group or heteroaryl group;
each R² independently stands for a group of the general formula (2):
-O-CHR³-C(=O)-O-R⁴ (2)
wherein
R³ independently stands for:
a vinyl or allyl group;
R⁴ stands for:
a substituted or unsubstituted alkyl group having 1 to 10 carbon atoms; and
m independently stands for 0 or 1, preferably 1.

2. The silane of claim 1, **characterized in that** each R¹ independently of one another stands for an alkyl group having 1 to 10 carbon atoms, particularly methyl, ethyl, propyl, or isopropyl, or for an alkenyl group having 2 to 10 carbon atoms, particularly vinyl or allyl.

3. The silane of any one of claims 1 to 2, **characterized in that** each R² independently of one another stands for a group of the formula (2), wherein R³ stands for vinyl.

4. The silane of any one of claims 1 to 3, wherein R⁴ stands for a substituted or unsubstituted alkyl group having 1 to 4 carbon atoms, particularly preferably methyl or ethyl.

5. The silane of any one of claims 1 to 4, wherein all R² are the same.

6. The silane of any one of claims 1 to 5, wherein m is 1, R¹ is vinyl, R³ is vinyl, and R⁴ is methyl or ethyl, preferably methyl.

7. A polyorganosiloxane containing at least one terminal group of the formula (3):
-A-Si(R¹)ₘ(R²)₃₋ₘ (3)
wherein:
A is a bond, -O- or a linear, branched or cyclic divalent group selected from hydrocarbon residues having 1 to 12 carbon atoms, alkylene, arylene, oxyalkylene, oxyarylene, siloxane-alkylene, siloxane-arylene, ester, amine, glycol, imide, amide, alcohol, carbonate, urethane, urea, sulfide, ether or a derivative or combination thereof;
R¹ represents:
a substituted or unsubstituted alkyl, alkenyl, or alkynyl group;
a substituted or unsubstituted cycloaliphatic group or aryl group;
a substituted or unsubstituted heteroalicyclic group or heteroaryl group;
each R² independently represents a group of the general formula (2):
-O-CHR³-C(=O)-O-R⁴ (2)
wherein
R³ represents:
a vinyl or allyl group;
R⁴ represents:
a substituted or unsubstituted alkyl group having 1 to 10 carbon atoms; and
m independently is 0 or 1, preferably 1;
wherein said polyorganosiloxane is obtained by reacting a polyorganosiloxane (la) having at least one reactive group/atom A', preferably at least one hydroxy group, bound to a silicon atom with the silane of formula (1) according to any one of claims 1 to 6, wherein any R² of the silane of formula (1) reacts with A' to form the linking group -A-;
optionally in the presence of a (endcapping) catalyst for said reaction.

8. A curable composition comprising
(A) at least one polyorganosiloxane, which has at least one hydroxy group bound to a silicon atom,
(B) at least one crosslinking silane, wherein the crosslinking silane is a silane according to any one of claims 1 to 6.

9. The curable composition of claim 8, further comprising (C) at least one endcapping catalyst.

10. The curable composition of claim 8 or 9, further comprising (D) at least one curing catalyst, preferably a tin compound.

11. The curable composition of any one of claims 8 to 10, wherein, relative to the total weight of the curable composition or the total amount of components (A) to (D), the composition comprises
(1) at least one polyorganosiloxane which has at least one hydroxy group bound to a silicon atom (A) in an amount of 30 to 95% by weight;
(2) at least one silane of formula (1) (B) in an amount of 1 to 15% by weight, preferably in an amount of 3 to 10% by weight;
(3) optionally, at least one endcapping catalyst (C) in an amount of 0.01 to 2% by weight, preferably in an amount of 0.05 to 2% by weight, particularly preferably in an amount of 0.1 to 0.5% by weight; and/or
(4) optionally, at least one curing catalyst (D) in an amount of 0.01 to 2% by weight, preferably in an amount of 0.05 to 2% by weight, particularly preferably in an amount of 0.1 to 0.5% by weight.

12. A curable composition comprising at least one polyorganosiloxane according to claim 7, optionally further comprising (C) at least one endcapping catalyst and/or (D) at least one curing catalyst, preferably a tin compound.

13. The curable composition of any one of claims 8 to 12, wherein the composition comprises any one or more further component(s) selected from the group consisting of plasticizers, stabilizers, antioxidants, fillers, reactive diluents, drying agents, adhesion promoters, UV stabilizers, rheological aids, and solvents.

14. The curable composition of any one of claims 8 to 13, wherein the composition is an adhesive, sealant or coating composition.

15. Use of the curable composition of any one of claims 8 to 13 as an adhesive, sealant or coating.

## Patentansprüche

1. Silan der Formel (1),
Si(R¹)ₘ(R²)₄₋ₘ (1)
wobei
jedes R¹ unabhängig voneinander steht für:
eine substituierte oder unsubstituierte Alkyl-, Alkenyl- oder Alkinylgruppe;
eine substituierte oder unsubstituierte cycloaliphatische Gruppe oder Arylgruppe;
eine substituierte oder unsubstituierte heteroalicyclische Gruppe oder Heteroarylgruppe;
jedes R² unabhängig voneinander für eine Gruppe der allgemeinen Formel (2) steht:
-O-CHR³-C(=O)-O-R⁴ (2)
wobei
R³ unabhängig voneinander steht für:
eine Vinyl- oder Allylgruppe;
R⁴ steht für:
eine substituierte oder unsubstituierte Alkylgruppe mit 1 bis 10 Kohlenstoffatomen; und
m unabhängig für 0 oder 1, vorzugsweise für 1, steht.

2. Silan nach Anspruch 1, **dadurch gekennzeichnet, dass** jedes R¹ unabhängig voneinander für eine Alkylgruppe mit 1 bis 10 Kohlenstoffatomen, insbesondere Methyl, Ethyl, Propyl oder Isopropyl, oder für eine Alkenylgruppe mit 2 bis 10 Kohlenstoffatomen, insbesondere Vinyl oder Allyl, steht.

3. Silan nach einem der Ansprüche 1 bis 2,
**dadurch gekennzeichnet, dass** jedes R² unabhängig voneinander für eine Gruppe der Formel (2) steht, wobei R³ für Vinyl steht.

4. Silan nach einem der Ansprüche 1 bis 3, wobei R⁴ für eine substituierte oder unsubstituierte Alkylgruppe mit 1 bis 4 Kohlenstoffatomen, insbesondere vorzugsweise für Methyl oder Ethyl, steht.

5. Silan nach einem der Ansprüche 1 bis 4, wobei alle R² gleich sind.

6. Silan nach einem der Ansprüche 1 bis 5, wobei m 1 ist, R¹ Vinyl ist, R³ Vinyl ist und R⁴ Methyl oder Ethyl ist, vorzugsweise Methyl.

7. Polyorganosiloxan, das mindestens eine endständige Gruppe der Formel (3) enthält:
-A-Si(R¹)ₘ(R²)₃₋ₘ (3)
wobei:
A eine Bindung, -O- oder eine lineare, verzweigte oder cyclische zweiwertige Gruppe ist, ausgewählt aus Kohlenwasserstoffrückständen, die 1 bis 12 Kohlenstoffatome aufweisen, Alkylen, Arylen, Oxyalkylen, Oxyarylen, Siloxanalkylen, Siloxanarylen, Ester, Amin, Glykol, Imid, Amid, Alkohol, Carbonat, Urethan, Harnstoff, Sulfid, Ether oder einem Derivat oder einer Kombination davon;
R¹ steht für:
eine substituierte oder unsubstituierte Alkyl-, Alkenyl- oder Alkinylgruppe;
eine substituierte oder unsubstituierte cycloaliphatische Gruppe oder Arylgruppe;
eine substituierte oder unsubstituierte heteroalicyclische Gruppe oder Heteroarylgruppe;
jedes R² unabhängig voneinander für eine Gruppe der allgemeinen Formel (2) steht:
-O-CHR³-C(=O)-O-R⁴ (2)
wobei
R³ steht für:
eine Vinyl- oder Allylgruppe;
R⁴ steht für:
eine substituierte oder unsubstituierte Alkylgruppe mit 1 bis 10 Kohlenstoffatomen; und
m unabhängig 0 oder 1, vorzugsweise 1, ist;
wobei das Polyorganosiloxan durch Umsetzen eines Polyorganosiloxans (la) mit mindestens einer reaktiven Gruppe/Atom A', vorzugsweise mindestens einer Hydroxygruppe, die an ein Siliziumatom gebunden ist, mit dem Silan der Formel (1) nach einem der Ansprüche 1 bis 6 erhalten wird, wobei irgendein R² des Silans der Formel (1) mit A' unter Bildung der Verknüpfungsgruppe -A-reagiert;
optional in Gegenwart eines (Endverkappungs-)Katalysators für die Reaktion.

8. Härtbare Zusammensetzung, umfassend
(A) mindestens ein Polyorganosiloxan, das mindestens eine Hydroxygruppe, die an ein Siliziumatom gebunden ist, aufweist,
(B) mindestens ein vernetzendes Silan, wobei das vernetzende Silan ein Silan nach einem der Ansprüche 1 bis 6 ist.

9. Härtbare Zusammensetzung nach Anspruch 8, ferner umfassend (C) mindestens einen Endverkappungskatalysator.

10. Härtbare Zusammensetzung nach Anspruch 8 oder 9, ferner umfassend (D) mindestens einen Härtungskatalysator, vorzugsweise eine Zinnverbindung.

11. Härtbare Zusammensetzung nach einem der Ansprüche 8 bis 10, wobei die Zusammensetzung, bezogen auf das Gesamtgewicht der härtbaren Zusammensetzung oder die Gesamtmenge der Komponenten (A) bis (D), umfasst
(1) mindestens ein Polyorganosiloxan, das mindestens eine an ein Siliziumatom (A) gebundene Hydroxygruppe aufweist, in einer Menge von 30 bis 95 Gew.-%;
(2) mindestens ein Silan der Formel (1) (B) in einer Menge von 1 bis 15 Gew.-%, vorzugsweise in einer Menge von 3 bis 10 Gew.-%;
(3) optional, mindestens einen Endverkappungskatalysator (C) in einer Menge von 0,01 bis 2 Gew.-%, vorzugsweise in einer Menge von 0,05 bis 2 Gew.-%, insbesondere vorzugsweise in einer Menge von 0,1 bis 0,5 Gew.-%; und/oder
(4) optional, mindestens einen Härtungskatalysator (D) in einer Menge von 0,01 bis 2 Gew.-%, vorzugsweise in einer Menge von 0,05 bis 2 Gew.-%, insbesondere vorzugsweise 0,1 bis 0,5 Gew.-%.

12. Härtbare Zusammensetzung, umfassend mindestens ein Polyorganosiloxan nach Anspruch 7, optional ferner umfassend (C) mindestens einen Endverkappungskatalysator und/oder (D) mindestens einen Härtungskatalysator, vorzugsweise eine Zinnverbindung.

13. Härtbare Zusammensetzung nach einem der Ansprüche 8 bis 12, wobei die Zusammensetzung eine oder mehrere weitere Komponente(n) umfasst, ausgewählt aus der Gruppe bestehend aus Weichmachern, Stabilisatoren, Antioxidantien, Füllstoffen, reaktiven Verdünnungsmitteln, Trocknungsmitteln, Haftvermittlern, UV-Stabilisatoren, rheologischen Hilfsmitteln und Lösungsmitteln.

14. Härtbare Zusammensetzung nach einem der Ansprüche 8 bis 13, wobei die Zusammensetzung ein Klebstoff, ein Dichtungsmittel oder eine Beschichtungszusammensetzung ist.

15. Verwenden der härtbaren Zusammensetzung nach einem der Ansprüche 8 bis 13 als einen Klebstoff, ein Dichtmittel oder eine Beschichtung.

## Revendications

1. Silane de formule (1),
Si(R¹)ₘ(R²)₄₋ₘ (1)
dans laquelle
chaque R¹ représente indépendamment :
un groupe alkyle, alcényle ou alcynyle substitué ou non substitué ;
un groupe cycloaliphatique substitué ou non substitué ou un groupe aryle ;
un groupe hétéroalicyclique ou substitué ou non substitué ou un groupe hétéroaryle ;
chaque R² représente indépendamment un groupe de la formule générale (2) :
-O-CHR³-C(=O)-O-R⁴ (2)
dans laquelle
R³ représente indépendamment :
un groupe vinyle ou allyle ;
R⁴ représente :
un groupe alkyle substitué ou non substitué ayant de 1 à 10 atomes de carbone ; et
m représente indépendamment 0 ou 1, de préférence 1.

2. Silane selon la revendication 1, **caractérisé en ce que** chaque R¹, indépendamment l'un de l'autre, représente un groupe alkyle ayant de 1 à 10 atomes de carbone, en particulier le méthyle, l'éthyle, le propyle ou l'isopropyle, ou un groupe alcényle ayant de 2 à 10 atomes de carbone, en particulier le vinyle ou l'allyle.

3. Silane selon l'une quelconque des revendications 1 à 2,
**caractérisé en ce que** chaque R², indépendamment l'un de l'autre, représente un groupe de la formule (2), dans laquelle R³ représente le vinyle.

4. Silane selon l'une quelconque des revendications 1 à 3, dans lequel R⁴ représente un groupe alkyle substitué ou non substitué ayant de 1 à 4 atomes de carbone, de préférence le méthyle ou l'éthyle.

5. Silane selon l'une quelconque des revendications 1 à 4, dans lequel tous les R² sont les mêmes.

6. Silane selon l'une quelconque des revendications 1 à 5, dans lequel m est 1, R¹ est le vinyle, R³ est le vinyle et R⁴ est le méthyle ou l'éthyle, de préférence le méthyle.

7. Polyorganosiloxane contenant au moins un groupe terminal de la formule (3) :
-A-Si(R¹)ₘ(R²)₃₋ₘ (3)
dans laquelle :
A est une liaison, -O- ou un groupe divalent linéaire, ramifié ou cyclique choisi parmi les résidus hydrocarbonés ayant 1 à 12 atomes de carbone, l'alkylène, l'arylène, l'oxyalkylène, l'oxyarylène, le siloxane-alkylène, le siloxane-arylène, l'ester, l'amine, le glycol, l'imide, l'amide, l'alcool, le carbonate, l'uréthane, l'urée, le sulfure, l'éther ou un dérivé ou une combinaison de ceux-ci ;
R¹ correspond à :
un groupe alkyle, alcényle ou alcynyle substitué ou non substitué ;
un groupe cycloaliphatique substitué ou non substitué ou un groupe aryle ;
un groupe hétéroalicyclique ou substitué ou non substitué ou un groupe hétéroaryle ;
chaque R² correspond indépendamment à un groupe de la formule générale (2) :
-O-CHR³-C(=O)-O-R⁴ (2)
dans laquelle
R³ correspond à :
un groupe vinyle ou allyle ;
R⁴ correspond à :
un groupe alkyle substitué ou non substitué ayant de 1 à 10 atomes de carbone ; et
m est indépendemment 0 ou 1, de préférence 1.
dans lequel ledit polyorganosiloxane est obtenu par réaction d'un polyorganosiloxane (la) ayant au moins un groupe/atome réactif A', de préférence au moins un groupe hydroxy, lié à un atome de silicium avec le silane de formule (1) selon l'une quelconque des revendications 1 à 6, dans lequel tout R² du silane de formule (1) réagit avec A' pour former le groupe de liaison -A- ;
éventuellement en présence d'un catalyseur (de coiffage terminal) pour ladite réaction.

8. Composition durcissable comprenant
(A) au moins un polyorganosiloxane qui a au moins un groupe hydroxy lié à un atome de silicium,
(B) au moins un silane réticulant, dans laquelle le silane réticulant est un silane selon l'une quelconque des revendications 1 à 6.

9. Composition durcissable selon la revendication 8, comprenant en outre (C) au moins un catalyseur de coiffage terminal.

10. Composition durcissable selon la revendication 8 ou 9, comprenant en outre (D) au moins un catalyseur de durcissement, de préférence un composé d'étain.

11. Composition durcissable selon l'une quelconque des revendications 8 à 10, dans laquelle, par rapport au poids total de la composition durcissable ou à la quantité totale des composants (A) à (D), la composition comprend
(1) au moins un polyorganosiloxane ayant au moins un groupe hydroxy lié à un atome de silicium (A) en une quantité de 30 à 95 % en poids ;
(2) au moins un silane de formule (1) (B) en une quantité de 1 à 15 % en poids, de préférence en une quantité de 3 à 10 % en poids ;
(3) éventuellement, au moins un catalyseur de coiffage terminal (C) en une quantité de 0,01 à 2 % en poids, de préférence en une quantité de 0,05 à 2 % en poids, en particulier de préférence en une quantité de 0,1 à 0,5 % en poids ; et/ou
(4) éventuellement, au moins un catalyseur de durcissement (D) en une quantité de 0,01 à 2 % en poids, de préférence en une quantité de 0,05 à 2 % en poids, en particulier de préférence en une quantité de 0,1 à 0,5 % en poids.

12. Composition durcissable comprenant au moins un polyorganosiloxane selon la revendication 7, comprenant éventuellement en outre (C) au moins un catalyseur de coiffage terminal et/ou (D) au moins un catalyseur de durcissement, de préférence un composé d'étain.

13. Composition durcissable selon l'une quelconque des revendications 8 à 12, dans laquelle la composition comprend un ou plusieurs composants supplémentaires choisis dans le groupe constitué de plastifiants, stabilisants, antioxydants, charges, diluants réactifs, agents de séchage, promoteurs d'adhésion, stabilisants UV, auxiliaires rhéologiques et solvants.

14. Composition durcissable selon l'une quelconque des revendications 8 à 13, dans laquelle la composition est un adhésif, un produit d'étanchéité ou une composition de revêtement.

15. Utilisation de la composition durcissable selon l'une quelconque des revendications 8 à 13 comme adhésif, produit d'étanchéité, et/ou matériau de revêtement.
